# EUROPEAN PATENT APPLICATION

(11) **EP 3 575 657 A1**
(43) Date of publication of application: **04.12.2019**
(21) Application number: 17887630.6
(22) Date of filing: 20.12.2017
(51) Int. Cl.: F16L 11/11, B32B 1/08, F16L 9/12

(54) **COMPOSITE TUBE**

(30) Priority: 26.12.2016 JP 2016251954
(71) Applicant: Bridgestone Corporation, Tokyo 104-8340 (JP)
(72) Inventor: MITSUHASHI, Kohei, Tokyo 104-8340 (JP)
(74) Representative: Oxley, Robin John George
(86) International application number: PCT/JP2017/045833
(87) International publication number: WO 2018/123779

(57) **Abstract**

A composite pipe including a pipe body having a tubular shape, and a covering layer having a tubular shape, the covering layer covering an outer circumferential surface of the pipe body, the covering layer having a bellows shape with annular ridge portions protruding outwardly in a radial direction and annular groove portions depressed inwardly in a radial direction, the annular ridge portions and the annular groove portions being alternately formed in an axial direction of the pipe body, and the covering layer being shortenable in the axial direction of the pipe body by being guided along the outer circumferential surface of the pipe body, including polyethylene as a main component, and having a density of from 915 kg/m³ to 940 kg/m³.

## Description

### Technical Field

The present disclosure relates to a composite pipe having a multilayer structure.

### Background Art

Heretofore, various pipes, which cover piping in order to protect the piping, have been proposed. For example, Patent Literature 1 discloses a corrugated pipe for a wiring or piping material, through which the wiring or piping material is inserted, and at least the inner side of which is formed of a polyolefin synthetic resin or vinyl chloride resin mixed with a fluorocarbon resin.

[Patent Literature 1] Japanese Patent Application Laid-Open (JP-A) No. 2015-48909

### Summary of Invention

### Technical Problem

As disclosed in Patent Literature 1, a composite pipe which has an inner pipe body and a bellows-like covering layer covering the outer circumferential surface of the pipe body has been known. Further, with respect to a composite pipe having a pipe body and a covering layer, a configuration in which an intermediate layer is disposed as a buffer layer between the pipe body and the covering layer in order to increase the shock-absorbing property is also conceivable. Meanwhile, with respect to such a composite pipe, when a coupling or the like is connected to an end of the internal pipe body, it is required to move the covering layer to expose an end of the pipe body.

Therefore, the covering layer covering the pipe body is required to have ease of expansion and contraction (peeling properties) enabling the covering layer to be easily expanded and contracted in the axial direction of the pipe body.

Considering the above situation, an object of the present disclosure is to provide a composite pipe including a pipe body having a tubular shape and a covering layer that has a tubular shape and covers an outer circumferential surface of the pipe body, having a covering layer with excellent ease of expansion and contraction.

### Solution to Problem

The above problems are solved by the following disclosure.
<1> A composite pipe including a pipe body having a tubular shape, and a covering layer having a tubular shape, the covering layer covering an outer circumferential surface of the pipe body, the covering layer having a bellows shape with annular ridge portions protruding outwardly in a radial direction and annular groove portions depressed inwardly in the radial direction, the annular ridge portions and the annular groove portions being alternately formed in an axial direction of the pipe body, the covering layer being shortenable in the axial direction of the pipe body by being guided along the outer circumferential surface of the pipe body, and the covering layer including polyethylene as a main component and having a density of from 915 kg/m³ to 940 kg/m³.

### Advantageous Effects of Invention

According to an aspect of the present disclosure, there can be provided a composite pipe including a pipe body having a tubular shape and a covering layer that has a tubular shape and covers an outer circumferential surface of the pipe body, having a covering layer with excellent ease of expansion and contraction.

### BRIEF DESCRIPTION OF DRAWINGS

FIG. 1 is a perspective view showing a composite pipe according to an embodiment of the present disclosure.
FIG. 2 is a longitudinal cross-sectional view showing a composite pipe according to an embodiment of the present disclosure.
FIG. 3 is a partially enlarged view of a longitudinal cross section of a composite pipe according to an embodiment of the present disclosure.
FIG. 4 is a diagram showing a step of manufacturing a composite pipe of the present disclosure.
FIG. 5 is a longitudinal cross-sectional view showing a state in which an end of the pipe body of a composite pipe according to an embodiment of the present disclosure is exposed.
FIG. 6 is a view showing a process in which the covering layer and the intermediate layer are shortened and deformed in the longitudinal cross section of FIG. 3.
FIG. 7 is a view showing a state in which the covering layer and the intermediate layer are shortened and deformed in the longitudinal cross section of FIG. 3.
FIG. 8 is a perspective view showing a state in which an end of the pipe body of a composite pipe according to an embodiment of the present disclosure is exposed.
FIG. 9 is a perspective view showing a composite pipe according to another embodiment of the present disclosure.
FIG. 10 is a graph in which the relationship between the densities of the covering layers and the press forces at 20% shortening of the covering layers in Examples 4 to 7, and Comparative Examples 4 to 5 is plotted.

### DESCRIPTION OF EMBODIMENTS

Hereinafter, an embodiment as an example of the composite pipe according to the present disclosure is described in detail appropriately with reference to the drawings. It is meant that constituent components indicated by the same symbol in each drawing are the same constituent components. It is noted that descriptions and symbols overlapped in the embodiment described below may be omitted.

The "main component" herein refers to a component having the highest content on a mass basis in a mixture, unless particularly noted.

### <Composite Pipe>

The composite pipe according to the present embodiment has a pipe body having a tubular shape and a covering layer having a tubular shape and covering an outer circumferential surface of the pipe body.

The covering layer has a bellows shape with annular ridge portions protruding outwardly in a radial direction and annular groove portions depressed inwardly in the radial direction, the annular ridge portions and the annular groove portions being alternately formed in an axial direction of the pipe body, and the covering layer is shortenable in the axal direction of the pipe body by being guided along the outer circumferential surface of the pipe body.

The covering layer contains polyethylene as a main component, and has a density of from 915 kg/m³ to 940 kg/m³.

### Density

With respect to a composite pipe, when an end of the internal pipe body is connected with a coupling or the like, an end of the covering layer is required to be shortened and displaced to expose an end of the pipe body. Therefore, ease of expansion and contraction (peeling properties) is required for the covering layer covering the pipe body such that the covering layer is easily expanded and contracted in the axial direction of the pipe body.

In contrast, in the present embodiment, the density of the covering layer is 940 kg/m³ or less.

In this case, the covering layer can have appropriate flexibility, and when attempting to expose an end of the pipe body, the covering layer can be easily shortened and peeled, so that an end of the pipe body can be easily exposed.

On the other hand, when the covering layer has a density of 915 kg/m³ or more, the strength of the covering layer can be appropriate, and excellent protection of the surface of the outer circumference of the composite pipe may be achieved.

The density of the covering layer is more preferably from 918 kg/m³ to 935 kg/m³, and further preferably from 920 kg/m³ to 930 kg/m³.

The density of the covering layer can be here measured according to "A method (water displacement method)" prescribed in JIS-K7112 (1999).

There is no particular restriction on the method of controlling the density of the covering layer within the above range, and examples thereof include a method of adjusting the molecular structure of polyethylene contained as a main component in the covering layer (that is, a method of adjusting the molecular structure of a monomer serving as a raw material of polyethylene and/or the cross-linked structure thereof), and a method of adjusting the molecular weight of polyethylene.

### Melt flow rate (MFR)

With respect to the composite pipe according to the present embodiment, it is preferable that the melt flow rate (MFR) of the covering layer is from 0.25 to 0.8.

The MFR of the covering layer is more preferably from 0.30 to 0.6, and further preferably from 0.35 to 0.5.

Production of a composite pipe having a pipe body and a bellows-shaped covering layer covering the pipe body is performed, for example, by applying a molten product of a resin composition for forming a covering layer on the outer circumferential surface of the pipe body, and solidifying the molten product while forming it into a bellows shape. Meanwhile, in a case in which a composite pipe having an intermediate layer between the pipe body and the covering layer is produced, for example, production is performed by winding a sheet to form the intermediate layer around the outer circumferential surface of the pipe body, applying further a molten product of a resin composition for forming a covering layer on the outer circumferential surface of the intermediate layer in such a condition, and solidifying the molten product while forming it into a bellows shape. In this case, for forming the molten product of the resin composition for forming a covering layer into a bellows shape, a method is conceivable by which a pair of molds each having a semi-arc inner surface with a bellows shape are made to approach the outer circumferential surface of the molten product from two directions to come into contact, such that the molten product is solidified to form a bellows shape.

In this regard, it is required that the molten product of the resin composition has high fluidity from the viewpoint of ease of application. However, if so, the molten product may not be fully accommodated inside the molds, and it may flow into a contact portion of the pair of the molds which the molten product should not normally reach. In such a case, burr may be generated outside the solidified covering layer.

On the other hand, in a case in which the MFR of the covering layer is 0.8 or less, when the resin composition for forming a covering layer is melted, the fluidity of a molten product may be controlled in an appropriate range, flowing of the molten product into a contact portion of the pair of molds is inhibited, and formation of burr outward in a radial direction on the covering layer is likely to be inhibited. Therefore, it may be inhibited that burr becomes an obstacle to the movement for shortening and displacement of the covering layer in order to expose an end of the pipe body, and ease of expansion and contraction (peeling properties) can be superior. In addition, a step of removing any burr generated outward in the radial direction on the covering layer may be omitted and complicated manufacturing process of the composite pipe can be avoided.

In addition, in a case in which the MFR of covering layer is 0.25 or more, ease of applying the molten product of a resin composition for forming a covering layer onto the outer circumferential surface of a pipe body and/or the outer circumferential surface of an intermediate layer is obtained. Further, in a case in which a porous resin layer is used as the intermediate layer, the resin of the covering layer can be easy to enter a porous structure of the porous resin layer, thereby resulting in an enhancement in the degree of adhesion of the intermediate layer and the groove portions of the covering layer described later.

The MFR of the covering layer here corresponds to a value obtained by measurement in conditions of a temperature of 190°C and a load of 2.16 kg according to the method prescribed in JIS K7210-1 (2014).

While the unit of the MFR is "g/10 minutes", the designation of the unit is herein omitted.

The method of controlling the MFR of the covering layer within the above range is not particularly limited, and examples include a method of adjusting the molecular structure of polyethylene included as a main component in the covering layer (namely, adjusting the molecular structure of a monomer serving as a raw material of polyethylene, and/or a crosslinked structure thereof) and a method of adjusting the molecular weight of polyethylene.

Next, a mode for carrying out the composite pipe of the present disclosure is described by way of example based on the drawings.

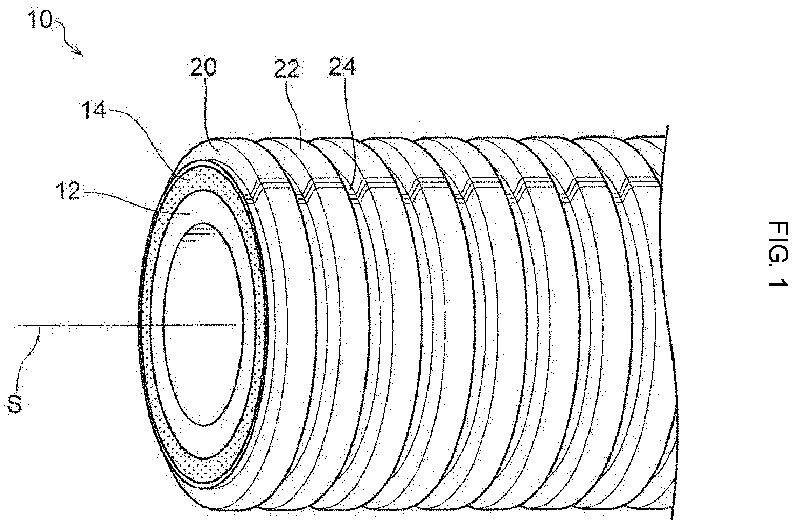

A composite pipe 10 according to the present embodiment shown in FIG. 1 includes a pipe body 12 and a covering layer 20 covering the outer circumferential surface of the pipe body, and further an intermediate layer 14 is disposed between the pipe body 12 and the covering layer 20. Meanwhile, the symbol S represents the axis of the pipe body 12, and its axial direction.

### (Pipe Body)

The pipe body 12 has a tubular shape.

The pipe body is composed of, for example, a resin material containing a resin. Examples of the resin in the resin material include polyolefins such as polybutene, polyethylene, crosslinked polyethylene, and polypropylene, and vinyl chloride, and such resins may be used singly, or in combination of two or more kinds thereof In particular, polybutene is suitably used, the resin preferably includes polybutene as a main component, and, for example, the resin material included in the pipe body can includes 85% by mass or more of polybutene.

The resin material included in the pipe body may be a material made of only the resin, or may contain other additive(s), provided that the resin is included as a main component.

### (Covering Layer)

The covering layer 20 has a tubular shape, and covers the outer circumferential surfaces of the pipe body 12 and the intermediate layer 14. The intermediate layer 14 is disposed between the pipe body 12 and the covering layer 20.

The covering layer has a density of from 915 kg/m³ to 940 kg/m³. A melt flow rate (MFR) of the covering layer is preferably from 0.25 to 0.8.

The covering layer is composed of a resin material containing a resin, and contains polyethylene as a main component. For example, the resin material composing the covering layer contains polyethylene preferably at 80% by mass or more, and more preferably at 90% by mass or more.

The polyethylene may have a cross-linked structure in the molecular structure.

In the resin material composing the covering layer, a resin other than polyethylene may be used in combination, and for example, a polyolefin such as polybutene or polypropylene, and poly (vinyl chloride) are used. The above may be used singly, or in combination of two or more kinds thereof.

The resin material composing the covering layer may be a material consisting solely of resin or may contain another additive.

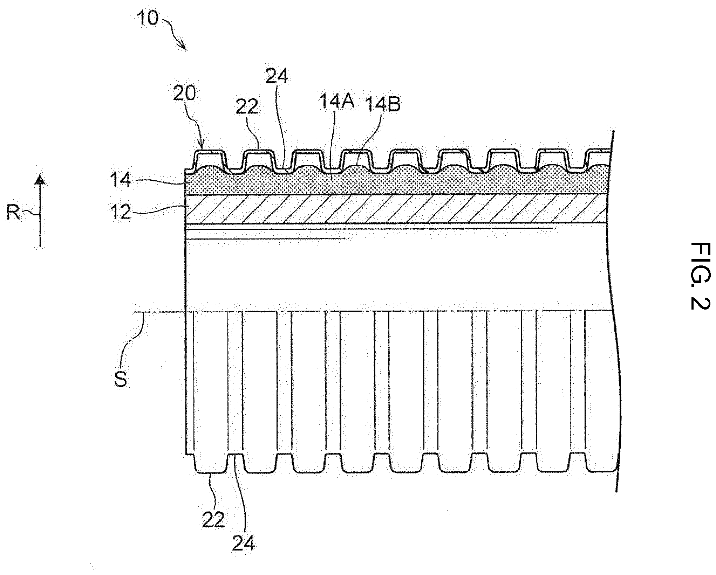

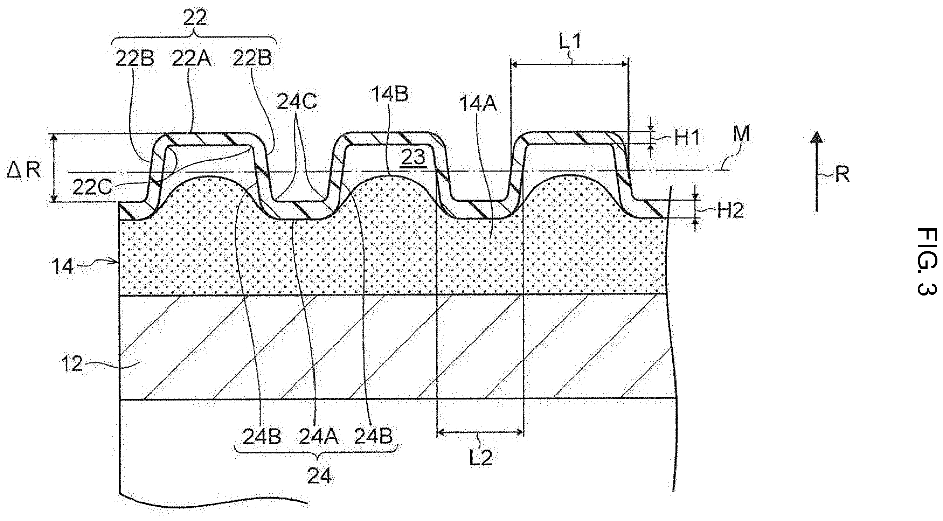

As illustrated in Figure 2, a covering layer 20 has a bellows shape, and annular ridge portions 22 protruding outwardly in a radial direction and annular groove portions 24 depressed inwardly in the radial direction are alternately continuously formed in an axial direction S of a pipe body 12. The ridge portions 22 is disposed more outward in a radial direction R, than the groove portions 24. As illustrated in Figure 3, in a case in which outermost portions of a bellows-shaped covering layer 20 in the radial direction are defined as outer walls 22A, and innermost portions thereof in the radial direction are defined as inner walls 24A, an intermediate portion M in the radial direction, between the outer walls 22A and the inner walls 24A is defined as a boundary, the areas outside the boundary in the radial direction are defined as ridge portions 22, and the areas inside the boundary in the radial direction are defined as a groove portions 24.

The ridge portion 22 includes an outer wall 22A extending in the axial direction S and side walls 22B extending from both ends of the outer wall 22A along with the radial direction R. Outer bent portions 22C are formed between the outer wall 22A and the side walls 22B. The groove portion 24 includes an inner wall 24A extending in the axial direction S and side walls 24B extending from both ends of the inner wall 24A along with the radial direction R. Inner bent portions 24C are formed between the inner wall 24A and the side walls 24B.

A protrusion space 23 recessed inside in the radial direction is formed inside the ridge portion 22 of the covering layer 20 in the radial direction. A projection portion 14B of an intermediate layer 14 described below is preferably inserted into the protrusion space 23.

The length L1 of each of the ridge portions 22 in the axial direction S is preferably set to be longer than the length L2 of each of the groove portions 24 in the axial direction S. In this regard, comparison of the length L1 and the length L2 is performed by comparing each average length. The respective average values of the length L1 and the length L2 are values obtained as the respective average values of measurements at optional 10 positions.

The length L1 is preferably at least 1.2-times the length L2 in order to ensure ease of deformation the outer walls 22A in shortening and deforming described below. Meanwhile, the length L1 is preferably at most 5-times the length L2. In a case in which the length L1 is at most 5-times the length L2, flexibility of a composite pipe 10 can be maintained. In a case in which the length L1 is too long, when the composite pipe 10 is provided, contact area of the composite pipe 10 with the ground increase, thereby resulting in difficulty in the providing of the composite pipe 10.

The covering layer 20 preferably has a thickness of 0.1 mm or greater at a thinnest portion and a thickness of 0.4 mm or less at a thickest portion in order to shorten the covering layer 20.

A thickness H1 of the outer wall 22A is preferably less than a thickness H2 of the inner wall 24A. Comparison of the thickness H1 with the thickness H2 is here performed by comparison of the respective averages of such thicknesses. The respective averages of the thickness H1 and the thickness H2 are defined as respective averages of values obtained by measurement at any 10 points. The thickness H1 is preferably at most 0.9-times the thickness H2 in order to ensure ease of deformation of the outer wall 22A in shortening and deforming described below.

A difference in radius ΔR between the outer surfaces of the ridge portion 22 and the groove portion 24 (that is, the difference between the average of the radii of the outer surface of the ridge portion 22 and the average of the radii of the outer surface of the groove portion 24, which is an index of distance in the radial direction between the outer surface of the ridge portion 22 and the outer surface of the groove portion 24) is preferably 800% or less of the average thickness of the covering layer 20. In a case in which the difference in radius ΔR is large, even if the portion along the axial direction S of the ridge portion 22 is not deformed, radially outward swelling of the groove portion 24, or a distorted deformation without mutual approach of the adjacent ridge portions 22 is inhibited when the covering layer is shortened. In a case in which the difference in radius ΔR is 800% or less of the average thickness of the covering layer 20, making the length, in the axial direction S, of the ridge portion 22 longer than the length, in the axial direction, of the groove portion 24 is effective to inhibit such a situation of deformation. It is especially effective when the difference in radius ΔR is 600% or less of the average thickness of the covering layer 20. In this regard, the respective average radii of the outer surfaces of the ridge portion 22 and the groove portion 24 are values obtained as the average values of measurements respectively at optional 10 positions. The average thickness of the covering layer 20 is the average of values obtained by measuring the thickness of the outer wall 22A, the thickness of an inner wall 24A, and the thickness at the middle part M (borderline) between the outer wall 22A and the inner wall 24A each at 10 positions.

There is no particular restriction on the diameter of the covering layer 20 (the average value of the diameters of the outer surfaces of the ridge portions 22), and it may be, for example, in a range of from 12.85 mm to 34.25 mm. In this regard, the average value of the diameters of the outer surfaces of the ridge portions 22 is average value of values obtained by measurements at optional 10 positions.

### (Intermediate Layer)

The composite pipe 10 of the present embodiment may have a structure in which an intermediate layer 14 is disposed between the pipe body 12 and the covering layer 20.

The intermediate layer 14 is composed of, for example, a resin material containing a resin, and preferably has additionally a porous structure. As the resin in a resin material composing the intermediate layer, polyurethane, polystyrene, polyethylene, polypropylene, an ethylene/propylene-diene rubber, and a mixture among these resins may be used, and among them polyurethane is more preferable. A layer containing polyurethane as a main component is preferable, and it is preferable that polyurethane occupies 80% by mass or more in the components of the intermediate layer, and more preferably 90% by mass or more. The resin material composing the intermediate layer may be a material consisting only of resin, or may contain another additive.

It is preferable that an abundance ratio of pores (for example, a forming rate in the case of a foam) in the intermediate layer is from 25/25 mm to 45/25 mm. The abundance ratio of pores can be measured by the method described in Appendix 1 of JIS-K6400-1 (2012).

The intermediate layer 14 is disposed between the pipe body 12 and the covering layer 20. The intermediate layer 14 is preferably held between the inner wall 24A of the groove portion 24 of the covering layer 20 and the pipe body 12, and more preferably compressed and held between the inner wall 24A and the pipe body 12 forming a compressively held portion 14A.

The inner circumferential surface of the intermediate layer 14 is preferably flat, is preferably fully in contact with the outer circumferential surface of the pipe body 12, and covers the outer circumferential surface of the pipe body 12. The "fully in contact with" here means not a need for completely close contact of the entire surface, but substantial contact of the entire surface. Accordingly, for example, in a case in which the intermediate layer 14 is formed with being wound by a sheet-shaped porous resin sheet, a seam portion may be partially separated or a portion wrinkled between the pipe body 12 and the covering layer 20 may be partially separated.

The intermediate layer can have, for example, a sheet shape. The intermediate layer 14 can be produced by, for example, winding a sheet-shaped intermediate sheet (first sheet) that is formed in a belt manner so as to have a width which has substantially the same length as the circumferential length of the outer circumferential surface of the pipe body 12, around the pipe body 12, and also feeding a resin composition for forming the covering layer 20, to the outer circumferential surface of thereof, and molding the resin composition.

The thickness of the intermediate layer 14 is equal to or greater than the difference between the outer circumferential surface of the pipe body 12 and the inner surface in the radial direction of the inner wall 24A, in a natural state (a state at a temperature of 23°C and a relative humidity of 45%, in which there acts no force, for example, neither compression nor tension), and the thickness of the intermediate layer 14 is preferably greater than the difference.

The intermediate layer 14 is thinner in thickness on the compressively held portion 14A, than that in the natural state, due to compression. A projection portion 14B is formed between adjacent, compressively held portions 14A of the intermediate layer 14. The projection portion 14B has a larger diameter than that of the compressively held portion 14A, and is projected into the protrusion space 23. The top of the projection portion 14B (the outermost portion in the radial direction) is preferably separated from the outer wall 22A in the protrusion space 23. In a case in which the intermediate layer 14 is compressed by the inner walls 24A and the pipe body 12, the compressively held portions 14A and the projection portions 14B are alternately continuously formed in the axial direction S, and the outer circumferential surface of the intermediate layer 14 has a wave shape. The thickness of the intermediate layer 14 in the natural state is preferably in a range of from 1.5 mm to 4.0 mm, more preferably from 2.0 mm to 3.0 mm from the viewpoint of ease of formation of the compressively held portions 14A compressed by the inner walls 24A and the pipe body 12. The thickness of the intermediate layer 14 in the natural state is defined as the average value of values obtained by measurement at any 10 points of the intermediate layer 14 taken out from the composite pipe 10.

A length, in the axial direction S, of the intermediate layer 14 extracted from between the pipe body 12 and the covering layer 20, in the natural state is preferably from 90% to 100% of a length, in the axial direction S, of the covering layer 20. The reason for this is because in a case in which the intermediate layer 14 is elongated and retained between the pipe body 12 and the covering layer 20, relative transferring between the intermediate layer 14 and the covering layer 20 can easily occur, thereby making shortening of the intermediate layer 14 and exposure of an end of the outer circumferential surface of the pipe body 12 can be impossible when the covering layer 20 is shorten and deformed. The length, in the axial direction S, of the intermediate layer 14 in the natural state, is preferably from 90% to 100% of the length, in the axial direction, of the covering layer 20, in order to suppress such relative transferring between the intermediate layer 14 and the covering layer 20.

Next, the action of the composite pipe 10 of the embodiment is described.

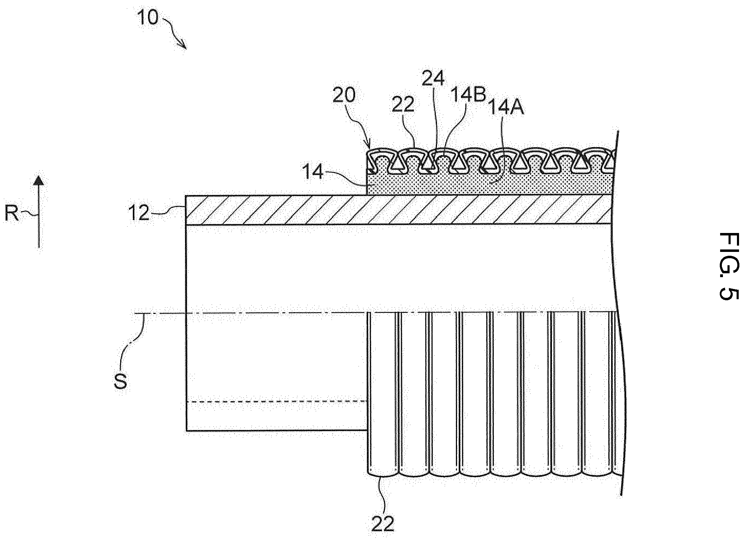

When the composite pipe 10 according to the embodiment and a coupling are connected, any force in a direction in which the covering layer 20 is shortened in the axial direction S to expose the pipe body 12 is acted on the covering layer 20 in the state illustrated in Figure 2. Thus, the covering layer 20 at one end is transferred in a direction in which the pipe body 12 is exposed, as illustrated in Figure 5.

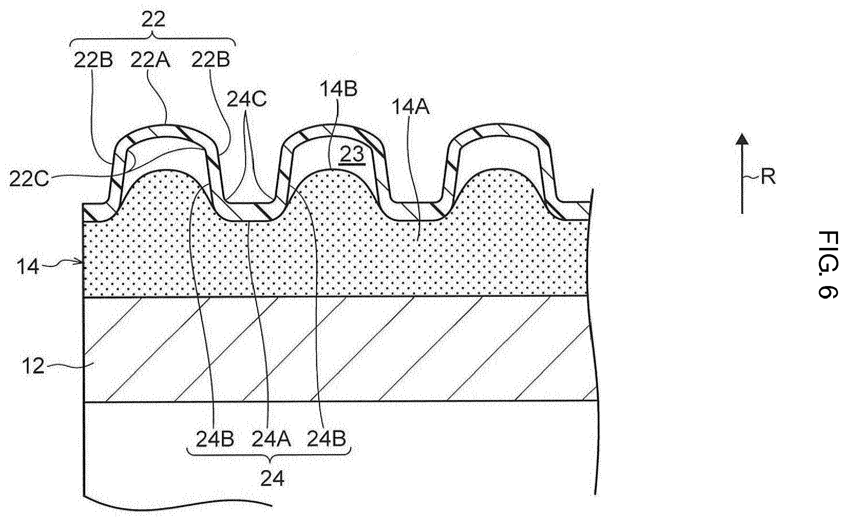

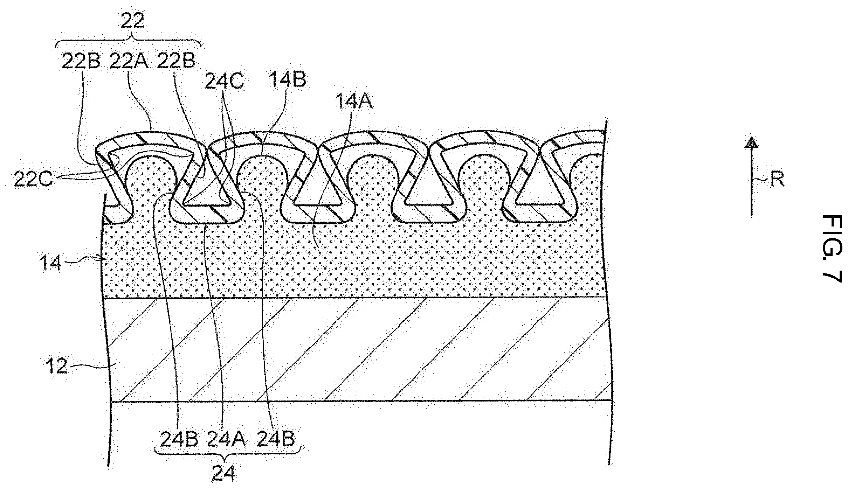

It is preferable in the outer wall 22A of the ridge portion 22 and the inner wall 24A of the groove portion 24 that the length L1 is longer than the length L2 in the axial direction S and the thickness H1 is less than the thickness H2. Thus, the outer wall 22A is more easily deformed than the inner wall 24A, and is deformed so as to swell outward in the radial direction as illustrated in Figure 6. Subsequently, the outer bent portion 22C of the ridge portion 22 and the inner bent portion 24C of the groove portion 24 are deformed so that the ridge portion 22 approaches to adjacent one, as illustrated in Figure 7. Thus, the covering layer 20 at one end is easily transferred in a direction in which the pipe body 12 is exposed, as illustrated in Figure 5. Thus, deformation is made so that the outer walls 22A swells out in shortening of the covering layer 20, and thus swelling of the groove portions 24 outward in the radial direction and/or distortion deformation due to no approaching of the ridge portions 22 to adjacent one can be suppressed even in the presence of more or less variations in the bending angle and the thickness of the covering layer 20. Thus, being deteriorated of the appearance of the covering layer 20 shortened can be inhibited.

In the present embodiment, the density of the covering layer 20 is 940 kg/m³ or less. As a result, ease of expansion and contraction (peeling properties) can be obtained for the covering layer 20, and when an end of the pipe body 12 is to be exposed, the covering layer 20 can be easily shortened in the axial direction S.

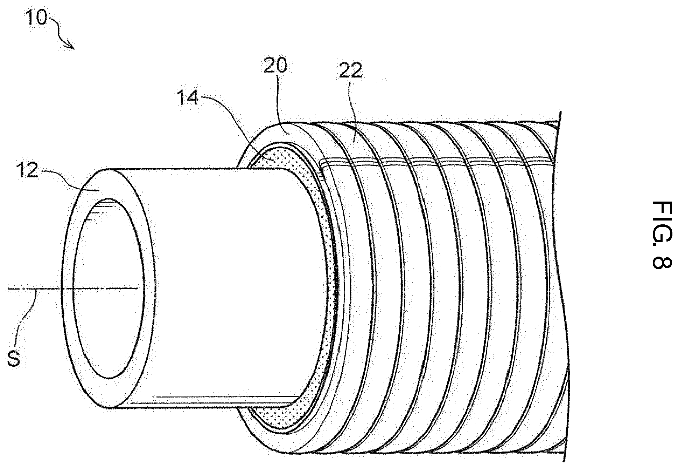

The intermediate layer 14 is compressed between the inner wall 24A and the pipe body 12, so that the compressively held portion 14A is in tight contact with the covering layer 20, and a projection portion 14B is engaged between the side walls 24B of the adjacent groove portions 24, and the intermediate layer may be easily shortened together with the covering layer 20. Owing to such a configuration, an end of the pipe body 12 can be exposed as depicted in FIG. 8.

While the thickness H1 of the outer walls 22A is set to be less than the thickness H2 of the inner walls 24A in the embodiment, the thickness H1 may be the same as the thickness H2.

While the outer walls 22A has a substantially straight shape in the axial direction S in the embodiment, the outer walls may have an arc shape swelling outward in the radial direction. The inner walls 24A may also have an arc shape swelling inward in the radial direction.

Further, in the present embodiment, it is preferable that the intermediate layer 14 is entirely in contact with the outer circumferential surface of the pipe body 12. By this means, after exposing an end of the pipe body 12 by moving the intermediate layer 14 and the covering layer 20 relative to the pipe body 12, the intermediate layer 14 and the covering layer 20 can be easily held at the shortened position by the friction force between the outer circumferential surface of the pipe body 12 and the inner circumferential surface of the intermediate layer 14.

Further, in the present embodiment, the intermediate layer 14 is compressed between the inner wall 24A and the pipe body 12. By this means, the compressively held portion 14A is brought into tight contact with the covering layer 20, and the projection portion 14B is engaged between the side walls 24B of the adjacent groove portions 24. Therefore the intermediate layer 14 may easily follow the movement of the covering layer 20, and remaining of the intermediate layer 14 on the outer circumferential surface of the pipe body 12 is inhibited, so that the intermediate layer can be easily shortened with the covering layer 20.

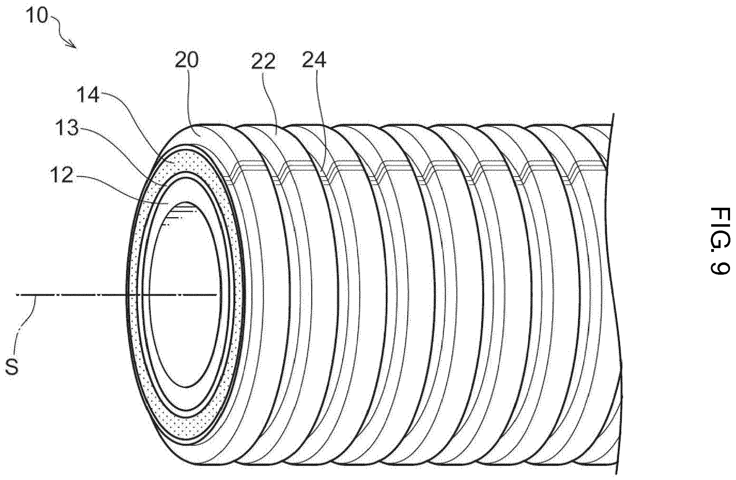

Further, in the present embodiment, as shown in FIG. 9, another layer 13 may be disposed between the intermediate layer 14 and the pipe body 12. For example, a low friction sheet may be provided to improve the sliding property between the intermediate layer 14 and the pipe body 12 to establish a configuration that the intermediate layer 14 and such other layer 13 can follow the covering layer 20 and the covering layer can easily deform, when an end of the pipe body 12 is to be exposed by shortening and deforming of the covering layer 20.

In the present embodiment, a mode without an intermediate layer 14 is also possible, and for example it may be a composite pipe constituted solely with a pipe body 12 and a covering layer 20.

### (Manufacturing Method)

Next, a method of manufacturing the composite pipe 10 of the present embodiment is described. In this regard, as an example, a method of manufacturing a composite pipe 10 having a pipe body 12, an intermediate layer 14, and a covering layer 20 is described.

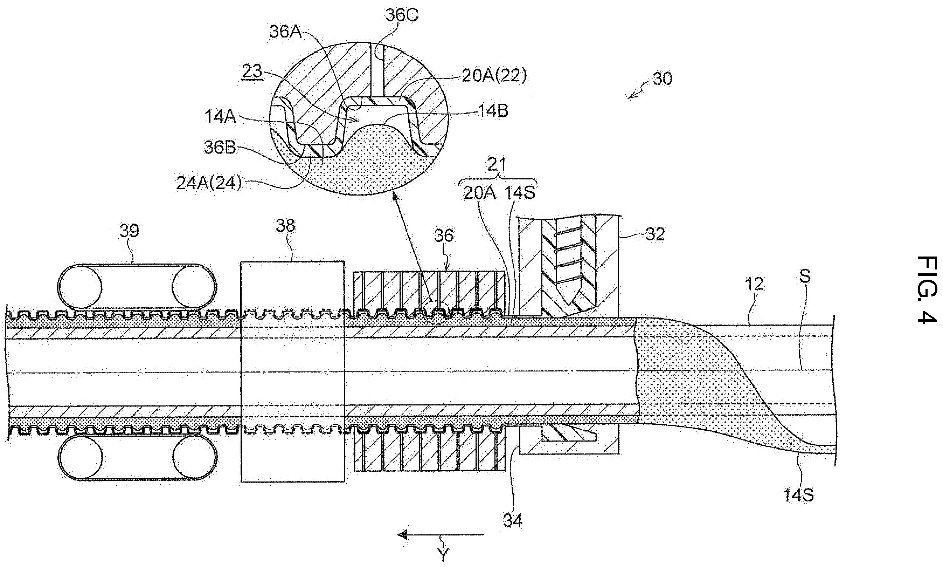

For example, a manufacturing apparatus 30 illustrated in Figure 4 can be used for manufacturing the composite pipe 10. The manufacturing apparatus 30 includes an extruder 32, a die 34, a corrugation mold 36, a cooling tank 38, and a receiving apparatus 39. The right section in Figure 4 is defined as being upstream in the manufacturing flow of the composite pipe 10 in the manufacturing apparatus 30, and the composite pipe is manufactured with the pipe body 12 being transferred from the right to the left. Hereinafter, the transferring direction is referred to as "manufacturing direction Y". The die 34, the corrugation mold 36, the cooling tank 38, and the receiving apparatus 39 are disposed in the listed order in the manufacturing direction Y, and the extruder 32 is disposed upstream relative to the die 34.

Although not illustrated, a pipe body 12 wound up in a coil shape, and a sheet-shaped member 14S, which is a sheet to form an intermediate layer 14 (for example, porous resin sheet) wound up in a roll shape, are disposed upstream of the die 34. The pipe body 12 in a coil shape and the sheet-shaped member 14S in a roll shape are pulled by the receiving apparatus 39 in the manufacturing direction Y, and thus continuously extracted. The sheet-shaped member 14S is wound around the entire outer circumferential of the pipe body 12 extracted continuously, before the die 34. In this regard, the sheet-shaped member 14S is slackened before the die 34 in order not to allow a tensile force to act, and is inserted into the die 34.

The outer circumferential surface of the sheet-shaped member 14S wound onto the outer circumferential surface of the pipe body 12 is applied with a molten resin material (a molten product of a resin composition for forming a covering layer 20) cylindrically extruded from the die 34, and a resin layer 20A is formed. In a case in which the MFR of the resin composition to be used is selected at 0.25 or more, the resin material can easily enter the pores (foams) in the porous resin sheet, so that the adhesion between the sheet-shaped member 14S and the resin layer 20A is improved.

After a tubular extruded product 21 including the pipe body 12, the sheet-shaped member 15S, and the resin layer 20A is formed, a corrugation step (step of formation of a bellows shape) is performed in the corrugation mold 36 disposed downstream relative to the die 34. The corrugation mold 36 corresponds to, for example, a pair of molds, and all the molds have a semi-arc inner surface. Each annular cavity 36A is formed on a portion of the inner circumferential surface of such a mold, corresponding to the ridge portions 22 of the covering layer 20, and each annular inner projection 36B is formed on a portion thereof, corresponding to the groove portions 24, and has a bellows shape. Each vent 36C is formed in such a cavity 36A, the vent being formed with having one end in communication with such a cavity 36A and penetrating through each of such corrugation molds 36. Suction in such a cavity 36A is performed from the outside of each of such corrugation molds 36 via the vent 36C.

Such a pair of corrugation molds 36 approaches to the resin layer 20A from two directions downstream relative to the die 34 and the inner surfaces thereof are brought into contact therewith, and the corrugation molds are transferred together with the pipe body 12 in the manufacturing direction Y with the outer circumferential surface of the tubular extruded product 21 being covered under pushing of the resin layer 20A by the inner projection 36B. Suction from the outside of the corrugation molds 36 is here performed to thereby impart a negative pressure in the cavity 36A. Thus, the resin layer 20A is transferred outward in the radial direction, and a bellows-shaped covering layer 20 along with each of the corrugation molds 36 is formed.

Meanwhile, in the present embodiment, the MFR of the covering layer 20 is preferably 0.8 or less. In a case in which the MFR is in the range, the fluidity of the molten product of a resin composition for forming a covering layer 20 is adjusted to an appropriate range, and it is inhibited that the molten product flows into a contact portion between a pair of corrugation molds 36 so that generation of burr radially outside the covering layer 20 is suppressed.

The sheet-shaped member 15S enters the cavity 36A in the protrusion space 23 corresponding to the ridge portions 22 of the covering layer 20, and the projection portions 14B is formed. A portion corresponding to the inner walls 24A of the groove portions 24 of the covering layer 20 is not only kept with adhering to the covering layer 20, but also compressed between the pipe body 12 and the inner walls 24A, and the compressively held portion 14A is formed.

After the corrugation step is performed on each of the corrugation molds 36, the covering layer 20 is cooled in a cooling tank 38. Thus, the composite pipe 10 is manufactured.

As described above, the present disclosure provides the following composite pipe.
<1> According to the first aspect of the present disclosure, a composite pipe including a pipe body having a tubular shape, and a covering layer, having a tubular shape, the covering layer covering an outer circumferential surface of the pipe body, the covering layer having a bellows shape with annular ridge portions protruding outwardly in a radial direction and annular groove portions depressed inwardly in the radial direction, the annular ridge portions and the annular groove portions being alternately formed in an axial direction of the pipe body, the covering layer being shortenable in the axial direction of the pipe body by being guided along the outer circumferential surface of the pipe body, and the covering layer includes polyethylene as a main component and having a density of from 915 kg/m³ to 940 kg/m³ is provided.
<2> According to the second aspect of the present disclosure, the composite pipe according to the first aspect, wherein the melt flow rate (MFR) of the covering layer is from 0.25 to 0.5, is provided.
<3> According to the third aspect of the present disclosure, the composite pipe according to the first or second aspect, wherein a length of each of the ridge portions in the axial direction is greater than the length of each of the groove portions in the axial direction, is provided.
<4> According to the fourth aspect of the present disclosure, the composite pipe according to any one of the first to third aspects, wherein a length, in the axial direction, of each of the ridge portions is at least 1.2-times a length, in the axial direction, of each of the groove portions, is provided.
<5> According to the fifth aspect of the present disclosure, the composite pipe according to any one of the first to fourth aspects, wherein a thickness of the ridge portions of the covering layer is less than a thickness of the groove portions of the covering layer, is provided.
<6> According to a sixth aspect of the present disclosure, the composite pipe according to any one of the first to fifth aspects, wherein the covering layer has a thickness of 0.1 mm or greater at a thinnest portion and a thickness of 0.4 mm or less at a thickest portion, is provided.
<7> According to a seventh aspect of the present disclosure, the composite pipe according to any one of the first to sixth aspects, wherein a difference in radius between an outer circumferential surface of the ridge portions and an outer circumferential surface of the groove portions is 800% or less than an average thickness of the covering layer, is provided.
<8> According to an eighth aspect of the present disclosure, the composite pipe according to any one of the first to seventh aspects, further including an intermediate layer disposed between the pipe body and the covering layer, is provided.
<9> According to a ninth aspect of the present disclosure, the composite pipe according to the eighth aspect, wherein the intermediate layer has a sheet shape and contacts with an entire outer circumferential surface of the pipe body, is provided.
<10> According to a tenth aspect of the present disclosure, the composite pipe according to the eighth or ninth aspect, wherein the intermediate layer includes compressively held portions, which is compressed and held between the groove portions and the pipe body, and a projection portions that project into protrusion spaces between a radial direction inner side of the ridge portions and the pipe body, is provided.

### EXAMPLES

Hereinafter, the present disclosure is further specifically described with reference to Examples, but the present disclosure is not intended to be limited to the following Examples.

### Example 1

### (Production of Composite Pipe)

A manufacturing apparatus having the structure shown in FIG. 4 was prepared. A polybutene pipe wound in a form of a coil was loaded as the pipe body 12, and a polyurethane foam sheet A produced by the method described later was loaded as the sheet-shaped member 14S. The receiving apparatus 39 was operated to continuously draw out the coiled polybutene pipe and the rolled-up polyurethane foam sheet A, and the polyurethane foam sheet A was wound around the entire outer circumferential surface of the polybutene pipe. The polyurethane foam sheet A was slackened before a die 34 and then inserted into the die 34.

Next, a molten resin material (low density polyethylene (LDPE), density 920 kg/m³, MFR 0.35) was cylindrically extruded from the die 34 and applied to the outer circumferential surface of the polyurethane foam sheet A to form a resin layer.

Then, a pair of corrugation molds 36 disposed on the downstream side of the die 34 were made to approach the resin layer from two directions to bring the inner surfaces into contact. The corrugation molds 36 are a pair of molds with the same inner surface shape, both of which have a semi-arc inner surface. On the inner circumferential surface, an annular cavity 36A is formed at a part corresponding to each ridge portion of the covering layer to be formed, and an annular inward projection 36B at a part corresponding to each groove portion is formed, such that a bellows shape is formed. In each of the cavities 36A, a vent 36C, one end of which is in communication with the cavity 36A through the corrugation mold 36, is formed. The resin layer 20A was moved together with the polybutene pipe in a manufacturing direction Y, while the resin layer 20A was pressed by the inward projections 36B, and the inside of cavity 36A was aspirated from the outside of the corrugation mold 36 to a negative pressure. Thus, the bellows covering layer was formed along the corrugation mold 36.

Then, by cooling in a cooling tank 38, a composite pipe was obtained.

In the obtained composite pipe, the length L1 in the axial direction S of the ridge portion 22 of the covering layer was 2.1 mm, and the length L2 in the axial direction S of the groove portion 24 was 1.5 mm.

The thickness of the covering layer was 0.2 mm at the thinnest portion and 0.5 mm at the thickest portion.

The difference in radius ΔR between the outer surfaces of the ridge portion 22 and the groove portion 24 was 88.9%.

The distance between the inner surface of the groove portion 24 of the covering layer and the outer surface of the polybutene pipe (the pipe body), namely the difference between the outer circumferential surface of the pipe body and the radially inner surface of the inner wall 24A of the covering layer (clearance at the compressively held portion) was 1.5 mm.

The diameter of the covering layer (the average value of the diameters of the outer surfaces of the ridge portions 22) was 23.5 mm.

The polyurethane foam sheet A (intermediate layer) was entirely in contact with the outer surface of the pipe body.

### (Production of Polyurethane Foam Sheet A)

A polyisocyanate and a polyol as raw materials were mixed and reacted together with a catalyst, a foaming agent, and a foam stabilizer, and the product was cut to a desired thickness with a cutting machine to yield a polyurethane foam sheet A having a thickness (average thickness in a natural state) of 2.5 mm.

### Example 2

A composite pipe was obtained in the same manner as Example 1, except that the resin material used for forming the covering layer was changed to polyethylene (density 920 kg/m³, MFR 1.2).

### Example 3

A composite pipe was obtained in the same manner as Example 1, except that the resin material used for forming the covering layer was changed to polyethylene (density 922 kg/m³, MFR 0.5).

### Comparative Example 1

A composite pipe was obtained in the same manner as Example 1, except that the resin material used for forming the covering layer was changed to polyethylene (density 957 kg/m³, MFR 0.3).

### Comparative Example 2

A composite pipe was obtained in the same manner as Example 1, except that the resin material used for forming the covering layer was changed to polyethylene (density 959 kg/m³, MFR 0.27).

### Comparative Example 3

A composite pipe was obtained in the same manner as Example 1, except that the resin material used for forming the covering layer was changed to polyethylene (density 956 kg/m³, MFR 0.14).

### <Evaluation Test>

### - Evaluation of Ease of Expansion and Contraction (Peeling properties) of Covering Layer -

A test, in which an axial end of a composite pipe was grasped by hand from the outside of the covering layer and the covering layer was shortened in the axial direction of the pipe body by pressing the other end of the composite pipe against a flat surface to expose the internal pipe body, was conducted and evaluated whether the shortening of the covering layer can be carried out easily or not.

The rating was conducted using Comparative Example 1 as a reference, and a case in which the shortening could be carried out easier (namely with a weaker force) than the reference was evaluated as "good". On the other hand, a case in which a force similar to, or stronger than that in Comparative Example 1 was necessary, was evaluated as "poor".

The results are shown in Table 1 below.

### - Generation of Burr -

Whether burr was generated radially outside a covering layer in producing a composite pipe due to penetration of a resin material for forming a covering layer into a contact portion between a pair of corrugation molds was visually examined. The results are shown in Table 1 below.
Yes: Burr was recognized.
No: Burr was not recognized at all.

**[Table 1]**

| | Covering layer | | Evaluation | |
|---|---|---|---|---|
| | Density (kg/m³) | MFR | Ease of Expansion and Contraction (Peeling properties) | Burr |
| Example 1 | 920 | 0.35 | Good | No |
| Example 2 | 920 | 1.2 | Good | Yes |
| Example 3 | 922 | 0.5 | Good | No |
| Comparative Example 1 | 957 | 0.3 | Poor | No |
| Comparative Example 2 | 959 | 0.27 | Poor | No |
| Comparative Example 3 | 956 | 0.14 | Poor | No |

| | | | | |
|---|---|---|---|---|
| In Comparative Examples 1 to 3 in which the density of the covering layer exceeded 940 kg/m³, it was not easy to shorten the covering layer in the axial direction. In contrast, in Examples 1 to 3 in which the density of the covering layer was 940 kg/m³ or less, the covering layer could be easily shortened. | | | | |

When similar tests were conducted in the same manner as above but by changing the resin material used so as to yield various covering layers having a different density, it was confirmed that in a case in which the density of the covering layer was on the upper side of the borderline of 940 kg/m³, the shortening of the covering layer was difficult, on the contrary in a case in which the density was 940 kg/m³ or less, the covering layer could be easily shortened.

In Example 2 in which the MFR of the covering layer exceeded 0.8, generation of burr was recognized, on the contrary in Examples 1 and 3 with the MFR of 0.8 or less, generation of burr was not recognized.

When similar tests were conducted in the same manner as above but by changing the resin material used so as to yield various covering layers having a different MFR, it was confirmed that in a case in which the MFR of the covering layer was on the upper side of the borderline of 0.8, burr was generated, on the contrary in a case in which the MFR was 0.8 or less, burr was not generated.

### [Examples 4 to 7, and Comparative Examples 4 to 5]

A high density polyethylene (HDPE) (density 967 kg/m³), and a low density polyethylene (LDPE) (density 920 kg/m³) were prepared.

A composite pipe was obtained in the same manner as in Example 1 except that the resin material used for forming a covering layer in Example 1 was changed to a mixed material having mixed the high density polyethylene (HDPE) and the low density polyethylene (LDPE) at the mass ratio set forth in Table 2 below. The density of the covering layer of each composite pipe obtained was a value shown in Table 2 below.

### <Evaluation Test>

### - Evaluation of Press Force at 20% Shortening of Covering Layer -

A test in which the covering layer at an axial end of the composite pipe was shortened in the axial direction of the pipe body by 20%, more specifically the covering layer with an axial length of 500 mm was shortened to 400 mm to expose the internal pipe body, was conducted. In doing so, a press force (N) required for shortening the covering layer by 20% was measured.

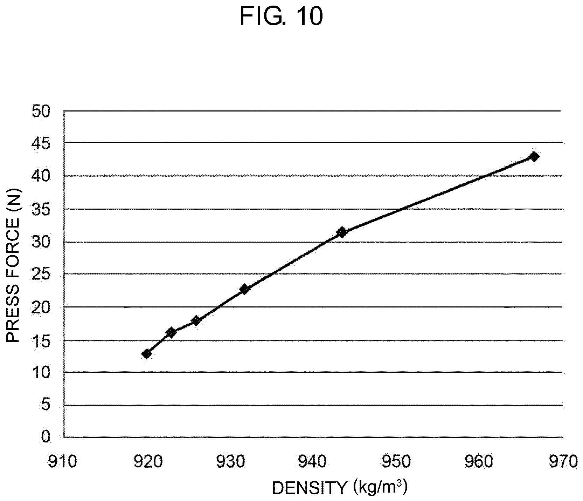

The results are shown in the following Table 2. In addition, a graph in which the relationship between the "densities" of the covering layers and the "press forces" at 20% shortening of the covering layers in Examples 4 to 7, and Comparative Examples 4 to 5 is plotted, is shown in FIG. 10.

**[Table 2]**

| | Mixing mass ratio | | Density (kg/m³) | Press force at 20% shortening [N] |
|---|---|---|---|---|
| | HDPE Density 967 kg/m³ | LDPE Density 920 kg/m³ | | |
| Example 4 | 0 | 100 | 920 | 12.9 |
| Example 5 | 6.25 | 93.75 | 923 | 15.9 |
| Example 6 | 12.5 | 87.5 | 926 | 17.8 |
| Example 7 | 25 | 75 | 932 | 22.5 |
| Comparative Example 4 | 50 | 50 | 944 | 31.3 |
| Comparative Example 5 | 100 | 0 | 967 | 42.9 |

| | | | | |
|---|---|---|---|---|
| In Comparative Examples 4 to 5 in which the density of the covering layer exceeded 940 kg/m³, the press force for shortening the covering layer of the composite pipe by 20% was large, and it was not easy to shorten the covering layer in the axial direction. On the other hand, in Examples 4 to 7 in which the density of the covering layer is 940 kg/m³ or less, the press force for shortening the covering layer of the composite pipe by 20% was at a reduced level, and the covering layer could be easily shortened. | | | | |

The disclosure of Japanese Patent Application No. 2016-251954 is herein incorporated by reference in its entity.

All documents, patent applications, and technical standards described herein are herein incorporated by reference, as if each individual document, patent application, and technical standard were specifically and individually indicated to be incorporated by reference.

### Reference Signs List

10 composite pipe, 12 pipe body, 14 intermediate layer, 14A compressively held portion, 14B projection portions, 15S sheet-shaped member, 20 covering layer, 22 ridge portions, 22A outer walls, 23 protrusion space, 24 groove portions, 24A inner walls, S axial direction

## Claims

1. A composite pipe comprising:
a pipe body having a tubular shape, and
a covering layer having a tubular shape, the covering layer covering an outer circumferential surface of the pipe body, the covering layer having a bellows shape with annular ridge portions protruding outwardly in a radial direction and annular groove portions depressed inwardly in the radial direction, the annular ridge portions and the annular groove portions being alternately formed in an axial direction of the pipe body, the covering layer being shortenable in the axial direction of the pipe body by being guided along the outer circumferential surface of the pipe body, and the covering layer comprising polyethylene as a main component and having a density of from 915 kg/m³ to 940 kg/m³.

2. The composite pipe according to claim 1, wherein a melt flow rate (MFR) of the covering layer is from 0.25 to 0.8.

3. The composite pipe according to claim 1 or 2, wherein a length of each of the ridge portions in the axial direction is greater than a length of each of the groove portions in the axial direction.

4. The composite pipe according to any one of claims 1 to 3, wherein a length, in the axial direction, of each of the ridge portions is at least 1.2-times a length, in the axial direction, of each of the groove portions.

5. The composite pipe according to any one of claims 1 to 4, wherein a thickness of the ridge portions of the covering layer is less than a thickness of the groove portions of the covering layer.

6. The composite pipe according to any one of claims 1 to 5, wherein the covering layer has a thickness of 0.1 mm or greater at a thinnest portion and a thickness of 0.4 mm or less at a thickest portion.

7. The composite pipe according to any one of claims 1 to 6, wherein a difference in radius between an outer circumferential surface of the ridge portions and an outer circumferential surface of the groove portions is 800% or less than an average thickness of the covering layer.

8. The composite pipe according to any one of claims 1 to 7, further comprising an intermediate layer disposed between the pipe body and the covering layer.

9. The composite pipe according to claim 8, wherein the intermediate layer has a sheet shape and contacts with an entire outer circumferential surface of the pipe body.

10. The composite pipe according to claim 8 or 9, wherein the intermediate layer comprises:
compressively held portions that are compressed and held between the groove portions and the pipe body, and
projection portions that project into protrusion spaces between a radial direction inner side of the ridge portions and the pipe body.
